# EUROPÄISCHE PATENTANMELDUNG

(11) **EP 2 090 163 A1**
(43) Veröffentlichungstag der Anmeldung: **19.08.2009**
(21) Anmeldenummer: 09001134.7
(22) Anmeldetag: 28.01.2009
(51) Int. Cl.: A01L 11/00, B23D 71/04

(54) **Hufhobel**

(30) Priorität: 15.02.2008 DE 102008009422
(71) Anmelder: August Rüggeberg GmbH & Co. KG, 51709 Marienheide (DE)
(72) Erfinder: Althoff, Norbert, 51789 Lindlar (DE)
(74) Vertreter: Rau, Manfred

(57) **Zusammenfassung**

Ein Hufhobel weist Schneid-Zähne (5) mit Schneid-Kanten (7) auf, die quer zur Längsachse (6) und damit zur Arbeits-Richtung (10) verlaufen. Die Schneid-Zähne (5) und die Spanbrecher-Nuten (14) sind durch spanende Bearbeitung hergestellt und verlaufen unter einem Winkel von 45° zur Längsachse. Der Hufhobel besteht aus einem hochwertigen Werkzeugstahl und weist eine Härte von mindestens 64 HRC auf.

## Beschreibung

Die Erfindung betrifft einen Hufhobel insbesondere für die Hufe von Pferden.

Aus der DE 201 17 786 U1 ist eine Hufraspel bekannt, die einen Raspelhieb aufweist, der aus einzelnen Spitzzähnen besteht, die in zur Längsachse der Raspel schrägen Reihen angeordnet sind.

Aus der WO 99/30558 A1 ist ein Hufhobel bekannt, der eine Feilenseite und eine Raspelseite aufweist, wobei die Schneidkanten der Raspel in einem Winkel von etwa 45° zur Längsachse der Raspel angeordnet sind.

Aus der DE 76 03 705 U ist ein angetriebenes Fräswerkzeug zur Bearbeitung von Hufen bekannt, bei dem die Schneidkanten gegen den Nutengrund zurückspringend angeordnet sind, um eine hinterschnittene Spanabnahme zu gewährleisten.

Aus der DE 460 335 A und US 1 433 306 A sind durch Fräsen hergestellte Feilen bekannt, die hinterschnittene Schneidkanten aufweisen.

Aus der DE 547 095 A und GB 577 391 A sind Feilen bekannt, die Spanbrechemuten aufweisen.

Pferdehufe müssen in regelmäßigen Abständen gekürzt werden, wozu ein Schlagmesser oder eine Hufzange verwendet werden. Danach werden die Hufe mit einer Hufraspel weiterbearbeitet, die üblicherweise eine Raspelseite für die grobe Bearbeitung des Horns und eine Feilseite für die feinere Nacharbeit, z. B. das Glätten des äußeren Hufes, aufweist. Falls die Hufe mit einem Hufeisen beschlagen werden, werden mit der Feilseite der Raspel die Nägel, der äußere Huf und das Eisen bearbeitet.

Die bekannten Hufraspeln können eine Angel als Griffstück oder zur Befestigung eines Griffs aufweisen. Die Raspelzähne auf der Raspelseite sind gehauen, d. h. der Raspelhieb wird mit einem sogenannten Haumeißel in den Stahl eingebracht. Hierbei werden die Zähne durch Umformen aufgeworfen, d. h. aus der Raspel-Fläche nach oben herausgetrieben. Hierdurch entsteht eine ungleichmäßige Zahngeometrie. Damit der Haumeißel überhaupt ausreichend tief in den Raspel-Körper eindringen kann, muss für den Raspel-Körper ein Stahl verwendet werden, der eine verhältnismäßig geringe Festigkeit aufweist. Dies bedeutet, dass der Stahl nur einen niedrigen Kohlenstoffgehalt und keinen Anteil an Chrom aufweisen darf. Aufgrund dieser Ausgangsvoraussetzungen erreicht dieser Stahl nach einem Härtevorgang nur eine Härte von maximal 58 HRC. Der geschilderte Hauprozess ist abhängig vom Glühzustand des verwendeten Stahls, also von dem dem Hauen der Zähne vorangehenden Weichglühen des Stahls, und der Geometrie und dem Verschleißzustand des Haumeißels. Außerdem ist die Konstruktion und der Wartungszustand der Haumaschinen von wesentlicher Bedeutung. Aufgrund dieser zahlreichen möglichen Mängel bei der Herstellung der Hufraspel weisen diese starke Qualitätsschwankungen auf, da der Aufwurf, d. h. der Auftrieb der Schneidzähne sehr unterschiedlich ist. Außerdem ist der Kraftaufwand beim Raspeln verhältnismäßig groß.

Der Erfmdung liegt daher die Aufgabe zugrunde, ein Werkzeug zur Bearbeitung von Hufen, insbesondere den Hufen von Pferden, zu schaffen, das einen gleichmäßigen Schnitt mit hoher Abtragsleistung bei hoher Standfestigkeit und geringem Kraftaufwand gewährleistet.

Diese Aufgabe wird erfmdungsgemäß durch die Merkmale des Anspruches 1 gelöst. Durch die Art der Gestaltung und Anordnung der Schneid-Zähne handelt es sich nicht mehr um eine Feile oder einen Raspel, sondern um einen Hufhobel. Die Schneidengeometrie der Hobel-Fläche ist derart, dass der Hufhobel auf dem Huf nicht einzelne Späne herausreißt, sondern schneidet, wodurch eine bessere Oberfläche am Huf erzeugt wird als mittels einer gehauenen Raspel. Dadurch, dass sowohl die Schneid-Zähne als auch die Spanbrecher durch spanende Bearbeitung, in der Regel also Fräsen, erzeugt werden, sind die geradlinig ausgebildeten Zähne besonders gleichmäßig ausgebildet; alle haben also die gleiche Schneidengeometrie und wirken daher gleichmäßig. Die vom Huf geschnittenen Hobel-Späne gleiten von der Schneidkante gleichmäßig über die Spanfläche in die Spankammer ab, wodurch die Reibung zwischen den Spänen und dem Hufhobel sehr gering wird. Die Freifläche ist aufgrund ihrer Neigung frei gegenüber der gehobelten Fläche des Hufes, so dass auch hier kaum eine Reibung auftritt. Beides führt zu einer deutlichen Reduzierung des Kraftaufwandes beim Hobeln. Weiterhin führt die spanende Erzeugung der Schneiden dazu, dass ein hochwertiger Werkzeugstahl eingesetzt werden kann, der nach dem Härten eine Härte von mindestens 64 HRC erreicht. Dadurch wird eine hohe Standfestigkeit des Hufhobels erzielt.

Weitere vorteilhafte Einzelheiten der Erfmdung ergeben sich aus den Unteransprüchen.

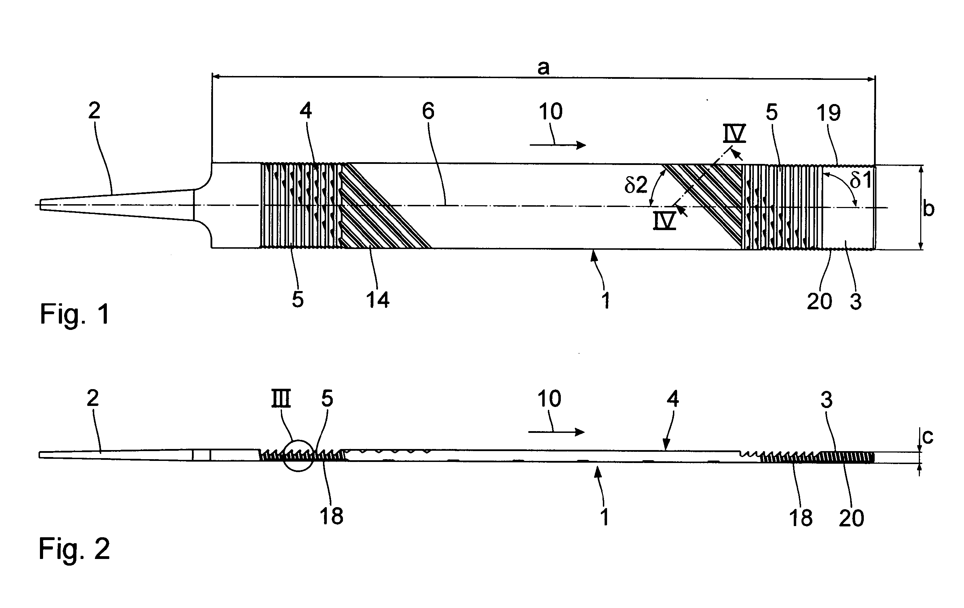

Weitere Merkmale, Vorteile und Einzelheiten der Erfindung ergeben sich aus der nachfolgenden Beschreibung eines Ausführungsbeispiels anhand der Zeichnung. Es zeigt
- Fig. 1: eine Draufsicht auf einen Hufhobel gemäß der Erfindung, wobei sowohl die Schneidzähne als auch die Spanbrecher-Nuten nur zum Teil dargestellt sind,
- Fig. 2: eine Seiten-Längsansicht des Hufhobels nach Fig. 1,
- Fig. 3: eine Teil-Seitenansicht gemäß dem Ausschnitt III in Fig. 2 in gegenüber Fig. 2 stark vergrößerter Darstellung,
- Fig. 4: einen Teil-Querschnitt durch den Hufhobel entsprechend der Schnittlinie IV-IV in Fig. 1 in stark vergrößerter Darstellung und

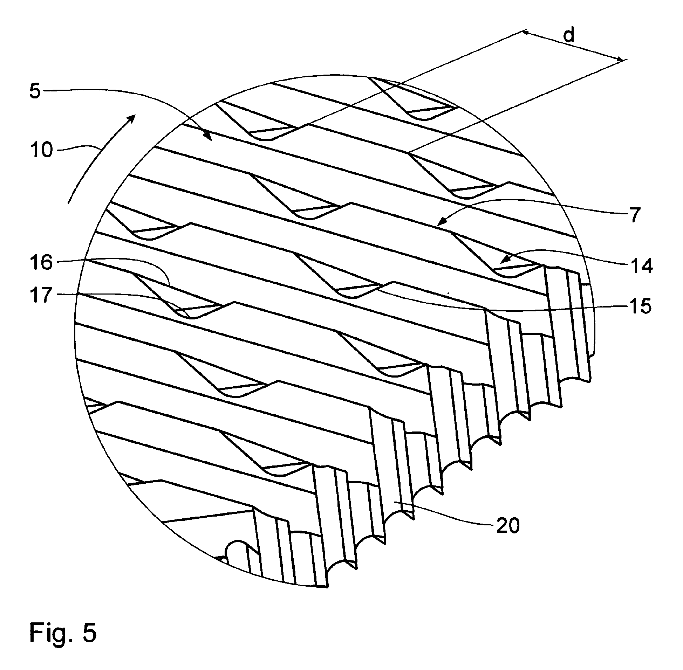

- Fig. 5: eine Teil-Schrägansicht auf den Hufhobel in gegenüber Fig. 1 stark vergrößerter Darstellung.

Der in der Zeichnung dargestellte Hufhobel weist einen langgestreckten, im Prinzip quaderförmigen, also in der Draufsicht rechteckigen Hobel-Körper 1 in der Form eines Feilen-Körpers mit einer Länge a von 320 bis 370 mm, einer Breite b von 43 bis 48 mm und einer Dicke c von 5 bis 8 mm auf. An einem Ende ist der Hobel-Körper 1 mit einer sogenannten Angel 2 versehen, wie sie bei Feilen üblich ist. Auf eine derartige Angel 2 kann der Benutzer einen Griff aufstecken. An dem der Angel 2 abgewandten Ende ist der Hobel-Körper 1 mit einem sogenannten Spiegel 3 versehen, d. h. einem Flächenbereich, der nicht mit einer Verzahnung versehen ist, so dass bei der Benutzung der Benutzer die Hand auflegen kann.

Auf der in der Zeichnung dargestellten Hobel-Fläche 4 des Hobel-Körpers 1 ist dieser mit Schneid-Zähnen 5 versehen, die unter einem Winkel δ1 gegenüber der Längsachse 6 des Hobel-Körpers 1 angeordnet sind, wobei gilt: δ1 = 90°. Selbstverständlich sind geringfügige Abweichungen von δ1 = 90° möglich. Die Schneid-Zähne 5 verlaufen also quer zur Längsachse 6 des Hobels und damit auch quer zur Hobel-Richtung.

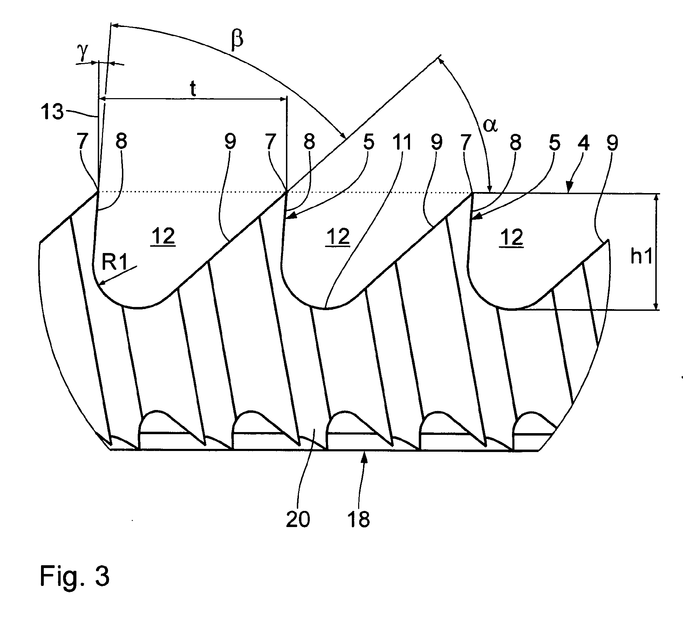

Wie sich aus Fig. 3 ergibt, weisen die Schneid-Zähne 5 Schneid-Kanten 7 auf, die quer zur Längsachse 6 verlaufen und durch die Durchdringung von Span-Fläche 8 und Frei-Fläche 9 gebildet werden. Die Span-Fläche 8 ist in Arbeits-Richtung 10, also in Hobel-Richtung, des Hobels voreilend und die Frei-Fläche 9 nacheilend zur Schneid-Kante 7 ausgebildet. Die Frei-Fläche 9 eines voreilenden Schneid-Zahns 5 und die Span-Fläche 8 eines gegenüber dem voreilenden Zahn 5 unmittelbar nacheilenden Zahns 5 begrenzen zusammen mit einem im Querschnitt teilkreisförmigen Spankammer-Boden 11 eine Spankammer 12. Der Spankammer-Boden 11 hat im Querschnitt einen Radius R1. Die Frei-Fläche 9 jedes Schneid-Zahns 5 schließt mit der Hobel-Fläche 4 einen Freiwinkel α ein, wobei für den Freiwinkel gilt: 30° ≤ α ≤ 50°. Die Span-Fläche 8 schließt mit einer Senkrechten 13 auf die Hobel-Fläche 4 einen positiven Spanwinkel γ ein, für den gilt: 0° < γ ≤ 20°, wobei die Angabe "positiv" beinhaltet, dass die Span-Fläche 8 vom Spankammer-Boden 11 zur Schneid-Kante 7 hin in Arbeits-Richtung 10 geneigt ist. Die Frei-Fläche 9 und die Span-Fläche 8 ein und derselben Spankammer 12 schließen einen Keilwinkel β ein, für den gilt: β = 90° - γ - α. Für die Zahnteilung t, also den Abstand zweier benachbarter Schneid-Kanten 7 in Richtung der Längsachse 6, gilt: 3 mm ≤ t ≤ 7 mm. Die Zahnhöhe h1 ist über die Breite jedes Schneid-Zahns 5 konstant und liegt im Bereich von 0,5 mm bis 3,0 mm, wobei sich ihre exakte Höhe h1 aus dem Radius R1 des Spankammer-Bodens 11, der Teilung t, dem Spanwinkel γ und dem Freiwinkel α ergibt.

Die Schneid-Zähne 5 sind mit sogenannten Spanbrecher-Nuten 14 versehen, die unter einem Winkel δ2 gegenüber der Längsachse 6 des Hobel-Körpers 1 verlaufen, wobei gilt: δ2 = 45°. Die Spanbrecher-Nuten 14 in ein und demselben Schneid-Zahn 5 sind in einem solchen seitlichen Abstand voneinander angeordnet, dass eine Spanbrecher-Nut 14 eines Schneid-Zahns 5 - bezogen auf die Längsachse 6 des Hobel-Körpers 1 - mittig zwischen zwei benachbarten Spanbrecher-Nuten 14 des nächsten voreilenden oder des nächsten nacheilenden Schneid-Zahns 5 angeordnet ist. In Verbindung mit der Teilung t ergibt sich hieraus eine Schneidelement-Länge d zwischen zwei benachbarten Spanbrecher-Nuten 14 eines Schneid-Zahns 5 von 3 mm ≤ d ≤ 8 mm.

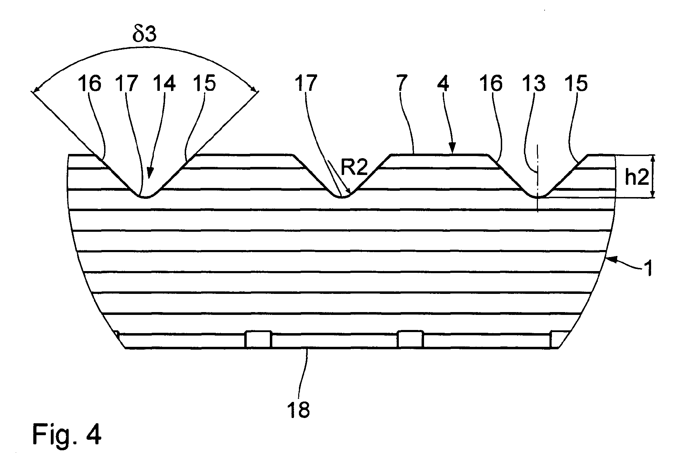

Wie aus Fig. 4 hervorgeht, werden die Spanbrecher-Nuten 14 durch sogenannte Neben-Schneiden 15, 16 begrenzt, die einen Öffnungswinkel δ3 einschließen. Die Neben-Schneiden 15, 16 sind durch einen im Querschnitt teilkreisförmigen Fuß-Abschnitt 17 mit einem Radius R2 von etwa 0,5 mm miteinander verbunden. Die Neben-Schneiden 15, 16 sind gegenüber der Senkrechten 13 auf die Hobel-Fläche 4 spiegelsymmetrisch angeordnet. Für den Öffnungswinkel δ3 gilt: 85° ≤ δ3 ≤ 95°. Die Tiefe h2 der Spanbrecher-Nuten 14 ist geringer als die Zahnhöhe h1. Der Fuß-Abschnitt 17 liegt also - bezogen auf die Hobel-Fläche 4 - höher als der Spankammer-Boden 11.

Sowohl die Schneid-Zähne 5 als auch die Spanbrecher-Nuten 14 werden durch spanende Bearbeitung, bevorzugt Fräsen, hergestellt, wodurch eine sehr präzise Formgebung der Schneid-Zähne 5 mit den Schneid-Kanten 7 und den Spanbrecher-Nuten 14 mit den Neben-Schneiden 15, 16 erreicht wird. Entsprechendes gilt für die Span-Flächen 8 und die Frei-Flächen 9.

Der Hobel-Körper 1 besteht aus einem hochwertigen Werkzeugstahl mit einem Kohlenstoffgehalt von 1,30 bis 1,50% und einem Chromgehalt von 0,35 bis 0,8%. Nach dem Herstellen der Schneid-Zähne 5 und der Spanbrecher-Nuten 14 wird der Hobel-Körper 1 gehärtet, so dass er eine Härte von mindestens 64 HRC aufweist. Durch den Chromgehalt und den Kohlenstoffgehalt wird die Bildung von Carbiden gefördert. Der Hufhobel weist demzufolge eine außerordentlich hohe Standzeit auf.

Durch die geschilderte Geometrie der Hobel-Fläche 4, d. h. durch die geschilderte Ausgestaltung der Schneid-Kanten 7 und der Spanbrecher-Nuten 14 in Verbindung mit der spanenden Herstellung und der Werkstoffwahl wird erreicht, dass ein optimales Verhältnis von Abtrag beim Hobeln von Pferde-Hufen, hierfür erforderlichem Kraftaufwand und Standzeit des Hufhobels erreicht wird.

An der der Hobel-Fläche 4 gegenüberliegenden Seite kann der Hobel-Körper 1 mit einer weiteren Verzahnung, beispielsweise mit einer Feil-Verzahnung 18 versehen sein. Auch die Seitenkanten können mit Seiten-Verzahnungen 19, 20 versehen sein, die aufgrund der geschilderten Werkstoff-Wahl ebenfalls spanend hergestellt werden. Die Feil-Verzahnung 18 kann insbesondere so gestaltet sein, dass mit ihr die zum Beschlagen von Pferde-Hufen verwendeten Nägel nach dem Beschlagen abgefeilt werden können.

## Patentansprüche

1. Hufhobel,
- mit einem langgestreckten Hobel-Körper (1),
-- der eine Hobel-Fläche (4) und
-- eine im Verhältnis zu seiner Breite b große Länge a und eine Längsachse (6) aufweist, und
-- der gehärtet ist,
- mit auf der Hobel-Fläche (4) ausgebildeten Schneid-Zähnen (5), die
-- parallel zueinander und quer zur Längsachse (6) verlaufen und
-- die eine in einer Arbeits-Richtung (10) vorgeordnete, als Span-Fläche (8) ausgebildete Vorderseite und eine dieser in der Arbeits-Richtung (10) nachgeordnet jeweils eine Frei-Fläche (9) aufweisen,
-- wobei in einer Durchdringungslinie der Span-Fläche (8) und der Frei-Fläche (9) eine Schneid-Kante (7) gebildet ist, wobei die einer Schneid-Kante (7) in Arbeits-Richtung (10) vorgeordnete Span-Fläche (8) und die Frei-Fläche (9) des in Arbeits-Richtung (10) voreilenden, unmittelbar benachbarten Schneid-Zahns (5) eine Spankammer (12) begrenzen, und
-- wobei die Schneid-Zähne (5) durch spanende Bearbeitung erzeugt sind,
und
- mit Spanbrecher-Nuten (14) in den Schneid-Zähnen (5), die
-- an den Schneid-Zähnen (5) Neben-Schneiden (15, 16) bilden,
-- unter einem Winkel δ2 zu den Schneid-Kanten (7) verlaufen, und
-- durch spanende Bearbeitung erzeugt sind.

2. Hufhobel nach Anspruch 1, **dadurch gekennzeichnet,**
**dass** die Schneid-Zähne (5) mit der Längsachse (6) einen Winkel δ1 einschließen, für den gilt: δ1 ∼ 90°.

3. Hufhobel nach Anspruch 1 oder 2, **dadurch gekennzeichnet,**
**dass** die Spanbrecher-Nuten (14) mit der Längsachse (6) einen Winkel δ2 einschließen, für den gilt: δ2 ∼ 45°.

4. Hufhobel nach einem der Ansprüche 1 bis 3, **dadurch gekennzeichnet,**
**dass** die Spanfläche (8) mit einer Senkrechten (13) auf die Hobel-Fläche (4) einen Spanwinkel γ einschließt, für den gilt: 0 < γ ≤ 20°.

5. Hufhobel nach einem der Ansprüche 1 bis 4, **dadurch gekennzeichnet,**
**dass** die Frei-Fläche (9) und die Hobel-Fläche (4) einen Freiwinkel α einschließen, für den gilt: 30° ≤ α ≤ 50°.

6. Hufhobel nach einem der Ansprüche 1 bis 5, **dadurch gekennzeichnet,**
**dass** die Spanbrecher-Nuten (14) einen Öffnungswinkel δ3 aufweisen, für den gilt: 85° ≤ δ3 ≤ 95°.

7. Hufhobel nach einem der Ansprüche 1 bis 3, **dadurch gekennzeichnet,**
**dass** die in Arbeits-Richtung (10) benachbarte Schneid-Zähne (5) eine Zahnteilung t aufweisen und
**dass** die Zahnteilung t und die Anordnung der Spanbrecher-Nuten (14) derart ist, dass - bezogen auf die Arbeits-Richtung (10) - eine Spanbrecher-Nut (14) in einem Schneid-Zahn (5) mittig gegenüber zwei benachbarten Spanbrecher-Nuten (14) im nächsten vorgeordneten und im nächsten nachgeordneten Schneid-Zahn (5) ausgebildet ist.

8. Hufhobel nach einem der Ansprüche 1 bis 7, **dadurch gekennzeichnet,**
**dass** in Arbeits-Richtung (10) benachbarte Schneid-Zähne (5) eine Zahnteilung t aufweisen, für die gilt: 3 mm ≤ t ≤ 8 mm.

9. Hufhobel nach einem der Ansprüche 1 bis 8, **dadurch gekennzeichnet,**
**dass** für die Zahnhöhe h1 der Schneid-Zähne (5) im Verhältnis zur Tiefe h2 der Spanbrecher-Nuten (14) gilt: h1 > h2.

10. Hufhobel nach einem der Ansprüche 1 bis 9, **dadurch gekennzeichnet,**
**dass** der Hobel-Körper (1) eine Härte von mindestens 64 HRC aufweist.
